# FASCICULE DE BREVET EUROPEEN

(11) **EP 1 294 600 B1**
(45) Date de publication et mention de la délivrance du brevet: **03.12.2008**
(21) Numéro de dépôt: 01947577.1
(22) Date de dépôt: 22.06.2001
(51) Int. Cl.: B60T 8/30, B62L 3/00

(54) **DISPOSITIF DE FREINAGE D'UN VEHICULE**
BREMSVORRICHTUNG EINES FAHRZEUGES
MOTOR VEHICLE BRAKING DEVICE

(30) Priorité: 29.06.2000 FR 0008641
(43) Date de publication de la demande: 26.03.2003
(73) Titulaire: SA Beringer, 42940 Chatelneuf (FR)
(72) Inventeur: BERINGER, Gilbert, F-42940 Chatelneuf (FR)
(74) Mandataire: Thivillier, Patrick
(86) Numéro de dépôt international: PCT/FR2001/001966
(87) Numéro de publication internationale: WO 2002/000483

(56) Documents cités:
- EP-A- 0 203 704
- EP-A- 0 524 821
- EP-A- 0 537 724
- DE-A- 3 213 281
- DE-A- 3 329 140
- DE-A- 19 508 915
- GB-A- 1 589 154

## Description

L'invention se rattache au secteur technique des dispositifs de freinage pour tous types de véhicules, notamment automobiles, motocyclettes .....

Pour l'essentiel, un dispositif de freinage, quel que soit son type, comprend un maître cylindre relié hydrauliquement à des étriers montés au niveau des organes de freinage des roues de véhicule, notamment des disques portés par les moyeux. Les étriers reçoivent des pistons pour agir, sous un effort de pression résultant d'un effort exercé sur un organe actionneur manoeuvrable à la main ou au pied en fonction du type de véhicule considéré, sur des plaquettes coopérant avec les disques.

L'action de freinage a pour but de créer une décélération du véhicule, suivie ou non de l'arrêt total de ce dernier. Cette action de freinage a pour effet de provoquer un transfert des masses à l'avant, modifiant ainsi l'assiette du véhicule qui a tendance à plonger de l'avant, en délestant par conséquent le train arrière dans le cas d'une voiture, ou la roue arrière dans le cas d'une motocyclette. Il est bien évident que le risque de basculement à l'avant du véhicule, lors d'une action de freinage, est beaucoup plus grave et beaucoup plus fréquent dans le cas d'un engin à deux roues, tels que les motocyclettes par exemple.

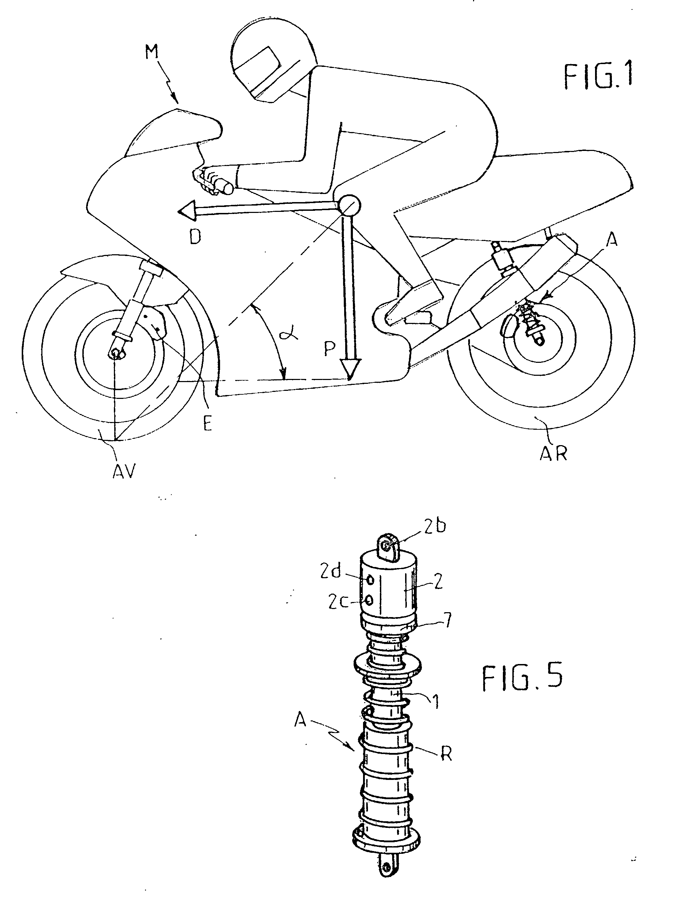

On renvoie à la figure 1 qui montre et qui explique ce phénomène de basculement vers l'avant dans le cas d'une motocyclette. Selon cette figure, α est l'angle formé par l'horizontal et la droite reliant le point de contact de la roue avant et le centre de gravité du pilote et de la moto. Soit P l'accélération de la pesanteur dirigée verticalement de haut en bas et D la décélération due au freinage. La limite de basculement vers l'avant du véhicule est atteinte quand la décélération est supérieure ou égale au rapport de l'accélération P par la tangente de l'angle α. La limite de la décélération est déterminée par l'adhérence du pneu sur la route. Soit µ cette limite. A titre indicatif nullement limitatif, on relève couramment un µ maximum de 1,5 sur le sec et un µ de 1 sur le mouillé. Par exemple, dans le cas d'une moto sportive, du type de celle illustrée figure 1, l'angle α est voisin de 45°, la moto pouvant basculer sur l'avant, si la limite maximum d'adhérence est supérieure à 1 sur un sol horizontal. Si la moto se trouve en descente, le basculement peut intervenir pour un µ supérieur à 0,9.

Il en résulte donc que le risque de basculement vers l'avant, lors du freinage, est particulièrement présent, sauf en cas d'adhérence précaire, ce qui représente un danger important. En effet, la roue arrière ne touchant plus le sol, le véhicule ne sera plus guidé ni contrôlable. De plus, dans le cas d'une motocyclette notamment, où la position est instable, si le pilote n'a pas le réflexe de relâcher instantanément les freins, un retournement total va se produire.

On observe également que les différents systèmes proposés, pour éviter le blocage des roues, notamment des roues avant en cas de freinage excessif, demeurent inopérant dès que le µ va dépasser 0,8 à 1, au motif que le freinage va se traduire par le basculement vers l'avant du véhicule, conduisant inévitablement à un accident. Plus généralement, tout véhicule dont la tangente de l'angle α est supérieure à 1/µ présente des risques de basculement au freinage.

L'état antérieur de la technique peut être illustré par l'enseignement du brevet EP 0 524 821 (l'état de la technique le plus proche) qui divulgue un système de commande des freins comportant des moyens pour déterminer qu'une charge d'adhérence au sol de la roue arrière, est inférieure ou égale à une valeur prédéterminée de la décélération. Le système comporte des moyens de commande pour réduire et commander une force de freinage du frein de la roue avant en fonction des résultats précédemment déterminés. De tels moyens de commande ont pour fonction d'empêcher le blocage de la roue avant.

Le brevet EP 0 537 724 concerne un procédé de régulation de la force de freinage des motos en ayant pour objectif de pouvoir détecter un signal de décollement symbolisant l'adhérence au sol de la roue arrière. Les moyens de mise en oeuvre consistent essentiellement en des capteurs de vitesse, des capteurs de rotation, des microprocesseurs, des modulateurs de pression, des volets de commutation, ... Il s'agit donc d'une solution entièrement électronique, qui ne permet pas d'éviter le décollement de la roue arrière, mais qui, tout au contraire, détecte le décollement de la roue arrière afin d'agir sur le système de freinage et de diminuer la pression au niveau du frein avant pour permettre à la roue arrière de reprendre contact avec le sol.
Un tel système ne permet donc pas d'éviter à la roue arrière de se soulever, mais permet, tout au plus, d'éviter le basculement vers l'avant de la moto, ce qui est purement théorique, car il est bien évident que le pilote aura de très grandes difficultés à contrôler la moto lorsque la roue arrière est décollée du sol.

L'invention s'est fixée pour but de remédier à ces inconvénients, de manière simple, sûre, efficace et rationnelle.

Le problème que se propose de résoudre l'invention est d'éviter tout décollement de la ou des roues arrière de tout type de véhicule en cas de freinage puissant, lorsqu'il y a une décélération importante provoquant un transfert des masses vers l'avant et par conséquent un délestage du train arrière ou de la roue arrière susceptible de provoquer le basculement vers l'avant du véhicule. Comme indiqué, cela est d'autant plus sensible dans le cas d'un véhicule à deux roues du type motocyclette.

Pour résoudre le problème posé de mesurer la charge exercée sur la ou les roues arrière, afin de déterminer la limite d'adhérence de cette dernière au-delà de laquelle peut se produire le phénomène de basculement vers l'avant, il a été conçu et mis au point un dispositif de freinage conforme aux caractéristiques de la revendication 1.

Avantageusement, les moyens aptes à mesurer la charge exercée sur la ou les roues arrière sont constitués par un piston monté coaxialement à l'élément amortisseur arrière et apte à être déplacé linéairement, d'une manière limitée avec capacité de guidage étanche, dans un chambrage d'un bloc support de distribution rendu solidaire d'une partie fixe du véhicule, ledit chambrage étant en communication avec le circuit hydraulique de freinage au niveau du maître cylindre et de l'étrier de la ou des roues avant.

Pour résoudre le problème posé de limiter le freinage de la ou des roues avant du véhicule, de manière à conserver une charge déterminée sur la ou les roues arrière, les moyens aptes à diminuer la pression sont constitués par une valve montée coaxialement en bout du piston en combinaison avec des agencements pour être commandée sous un effet de déplacement dudit piston en vue de réguler la pression hydraulique au niveau notamment de l'étrier de la ou de roues avant.

Avantageusement, la valve comprend un corps rendu solidaire d'un alésage formé en bout du piston, ledit corps présentant un chambrage interne faisant office de siège à une bille assujettie à un organe élastique, ledit chambrage étant en communication avec le circuit hydraulique du maître cylindre, la bille étant apte à coopérer avec un élément fixe sous un effet de déplacement du piston, pour être écartée de son siège.

Pour résoudre le problème posé d'asservir la décélération à une charge déterminée considérée comme normale, exercée sur la ou les roues arrière, le piston de la valve est en butée sur une partie fixe du bloc support, la bille étant écartée de son siège pour permettre le passage du fluide provenant du maître cylindre, en direction de l'étrier de la ou des roues avant ; inversement, lorsque ladite charge n'est pas considérée comme suffisante, il y a un déplacement relatif du piston de la valve et du bloc jusqu'à une autre position extrême de butée dudit piston correspondant au positionnement de la bille au fond de son siège pour diminuer la pression en direction dudit étrier.

L'élément fixe coopérant avec la bille est constitué par une vis solidaire du bloc support et débouchant dans les chambrages dudit bloc et du corps de valve.

Un autre problème que se propose de résoudre l'invention est de pouvoir déterminer quelle est la charge minimum que l'on veut garantir sur la ou les roues arrière. Dans ce but, le bloc support dans lequel est monté, avec capacité de déplacement linéaire, le piston de la valve est accouplé à l'élément amortisseur, en combinaison avec des moyens de réglage de la charge exercée sur la ou les roues arrière.

Un autre problème que se propose de résoudre l'invention est de pouvoir, si nécessaire, ralentir le déplacement du piston. Dans ce but, le piston de la valve est monté à l'intérieur du bloc avec capacité de déplacement linéaire à l'encontre d'un moyen d'amortissement hydraulique.

L'invention est exposée ci-après plus en détail à l'aide des figures des dessins annexés dans lesquels :
- la figure 1 est une vue à caractère schématique montrant, dans le cas d'une motocyclette, les éléments susceptibles de provoquer son basculement vers l'avant en cas de freinage important ;
- la figure 2 est une vue du dispositif selon l'invention monté en combinaison avec un élément amortisseur dont la forme de réalisation est donnée à titre indicatif, nullement limitatif ;
- la figure 3 est une vue partielle en coupe du dispositif au niveau de la valve, dans le cas d'une pression suffisante exercée sur la roue arrière, c'est-à-dire lorsqu'il n'y a pas de freinage ou un freinage de faible intensité ;
- la figure 4 est une vue correspondant à la figure 3 en cas de délestage de la roue arrière correspondant à un freinage puissant ;
- la figure 5 est une vue en perspective montrant l'intégration du dispositif à un élément amortisseur notamment pour motocyclette ;

Les figures des dessins montrent l'application du dispositif de freinage selon l'invention à une motocyclette. Il est bien entendu que ce type d'exemple ne doit pas être considéré comme limitatif, étant donné que le dispositif peut s'appliquer à tout type de véhicule.

Pour une meilleure compréhension de la suite de la description, on désigne par (M) l'ensemble de la motocyclette, (AV) la roue avant, (AR) la roue arrière, (E) l'étrier de frein de la roue avant et (A) l'ensemble de l'amortisseur de la roue arrière. Le maître cylindre n'est pas représenté.

Comme indiqué, le problème que se propose de résoudre l'invention est de limiter le freinage de la roue avant (AV) de manière à conserver une charge déterminée sur la roue arrière (AR). Autrement dit, pour résoudre ce problème, il convient de mesurer la charge exercée sur la roue arrière (AR), de manière à diminuer, si nécessaire, la pression au niveau de l'étrier (E) de la roue avant (AV) pour éviter tout soulèvement intempestif de la roue arrière (AR) en cas de freinage puissant.

Avantageusement et compte tenu du problème posé à résoudre, les moyens du dispositif de freinage selon l'invention sont reliés au circuit hydraulique et assujettis à l'élément amortisseur (A) de la roue arrière (AR).

Dans l'exemple nullement limitatif illustré, l'élément amortisseur (A) est constitué, pour l'essentiel, par un vérin (V) en combinaison avec un ressort (R).

Dans la forme de réalisation illustrée, une valve (VA) est fixée sur la tête du combiné de l'élément amortisseur au niveau de sa zone d'attache avec une partie fixe de la moto (M), de manière à recevoir toute la charge sur la roue arrière (AR) indépendamment des réglages de l'amortisseur en tant que tel. Dans ce but, un piston (1) est monté, avec capacité de déplacement linéaire guidé et étanche, dans un chambrage (2a) d'un bloc support (2) rendu solidaire en (2b) d'une partie fixe de la moto.

Avantageusement, mais non limitativement, le piston (1) est constitué, directement, par la tige du vérin amortisseur (V).

Le chambrage (2a) du bloc support (2) est en communication avec des orifices transversaux débouchants (2c) et (2d). L'orifice (2c) présente tout type d'agencement d'accouplement avec le circuit hydraulique du maître cylindre, tandis que l'orifice (2d) présente tout type d'agencement d'accouplement avec le circuit hydraulique de l'étrier de frein (E) de la roue avant (AV). L'étanchéité du piston (1) est assurée par des joints (3). La course de déplacement du piston (1) dans le chambrage (2a) du bloc support (2) est limité selon une valeur (e).

Selon une caractéristique importante de l'invention, la tête du piston (1) située dans le fond du chambrage (2a) du bloc support (2) présente la valve désignée dans son ensemble par (VA). Cette valve comprend un corps (4) rendu solidaire d'un alésage (1a) formé en bout du piston (1). Le corps (4) présente un chambrage interne (4a) faisant office de siège (4b) à une bille (5) assujettie à un organe élastique du type ressort (6). Le chambrage (4a) est en communication avec le circuit hydraulique du maître cylindre. Dans ce but, le fond du chambrage (4a) communique coaxialement par deux orifices (1b) et (1c) en communication avec une gorge annulaire externe (1d) du piston (1). La gorge annulaire (1d) est toujours en communication, quel que soit le positionnement du piston (1), avec l'orifice (2d) de raccordement avec le maître cylindre.

Le fond du chambrage (2a) recevant le piston (1) est en communication avec l'orifice (2d) de raccordement avec le circuit hydraulique de l'étrier de frein de la roue avant. La bille (5) est apte à coopérer avec un élément fixe (9), sous un effet de déplacement du piston (1), afin d'être écartée de son siège (4b), comme il sera indiqué dans la suite de la description. L'élément fixe (9) peut être constitué par une vis solidaire du bloc support (2) et débouchant dans le chambrage (2a) dudit bloc (2) et dans le chambrage (4a) du corps (4) de la valve (VA).

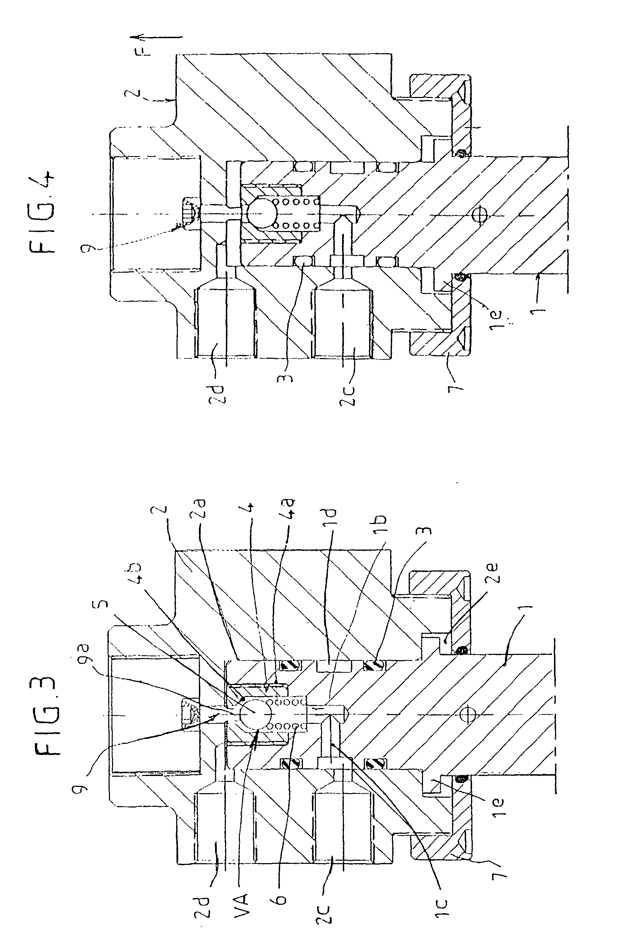

On se réfère aux figures 3 et 4 qui montrent le principe de fonctionnement du dispositif de freinage selon l'invention.

La figure 3 représente le dispositif de freinage sous l'effet d'une charge considérée comme normale au niveau de la roue arrière. C'est le cas par exemple si la moto ne freine pas ou freine avec une décélération inférieure à celle susceptible de provoquer un allégement suffisant de la roue arrière. Dans ce cas, le dispositif de freinage fonctionne comme si la valve n'existait pas. En effet, dans cette position, le piston (1) de la valve est en butée, par une collerette (1e), dans le fond d'un évidement (2e) du bloc support (2). La bille (5) est en butée contre la tige (9a) de la vis (9) et se trouve écartée de son siège (4b) en comprimant le ressort (6).

Le liquide de frein en provenance du maître cylindre passe normalement à travers les différents orifices pour être acheminé au travers du chambrage (4a) du corps (4) de la valve, au niveau de la dérivation (2d). A noter que, dans cette position, la tête du piston n'est pas en butée dans le fond du chambrage (2a) et laisse un espace suffisant pour le passage du liquide de frein.

La figure 4 montre le fonctionnement du dispositif dans le cas d'un freinage puissant. La décélération provoque un allégement de la roue arrière (AR) et, d'une manière concomitante, un déplacement relatif du piston de la valve (1) par rapport au bloc support (2) qui a tendance à être soulevé vers le haut (flèche F). Le piston (1) de la valve se trouve dans une autre position extrême de butée par sa collerette (1e) sur une bague (7). Dans cette position de butée, la bille (5), sous l'effet de détente du ressort (6) se trouve en appui dans le fond du siège (4b) du corps (4) de la valve obturant ainsi le passage du liquide de frein en provenance du maître cylindre.

La pression à la sortie du maître cylindre n'influe pas sur la décélération. Le piston (1) de la valve joue alors le rôle du maître cylindre. Sous l'effet de déplacement relatif du piston (1) de la valve et du bloc support (2), se produit une augmentation du volume de liquide dans le fond de l'alésage du bloc support (2), ce qui fait baisser la pression dans l'étrier de frein avant jusqu'à obtenir la charge désirée sur la roue arrière. Si cette charge augmente, il y aura un déplacement inverse du piston (1) de la valve augmentant, d'une manière concomitante, la pression au niveau de l'étrier de frein. La décélération est donc bien asservie à la charge déterminée sur la roue arrière (AR).

Dans cette position, le pilote peut relâcher les freins, le liquide provenant de l'étrier (E) peut passer au travers de l'orifice obturé par la bille.

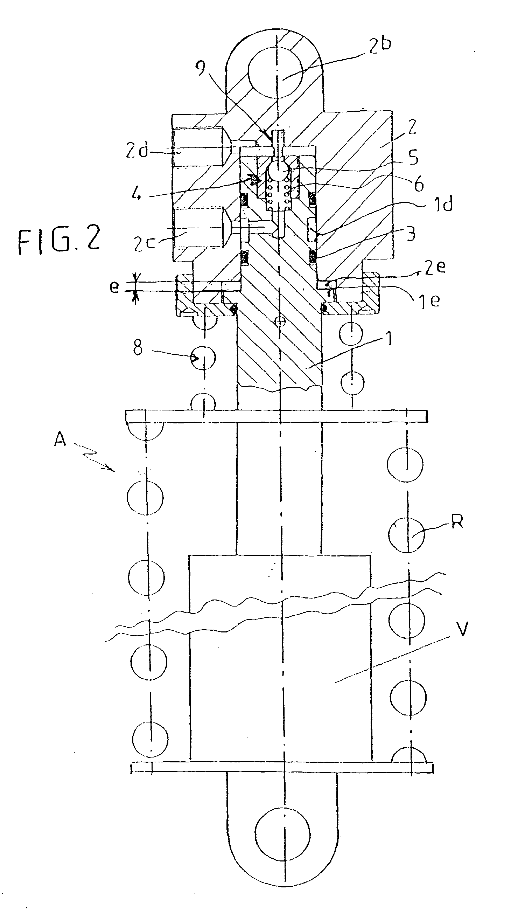

Comme le montrent les figures des dessins, notamment la figure 2, le bloc support (2) recevant le piston (1) de la valve peut être assujetti à l'élément amortisseur (A) par un ressort (8) dont le réglage de la précontrainte permet de choisir quelle est la charge minimum que l'on veut garantir sur la roue arrière.

De même, il est possible de créer un amortissement hydraulique dans le fonctionnement de la valve de manière à ralentir le déplacement du piston (1). Plus particulièrement, cet amortissement hydraulique peut être effectué dans l'évidement circulaire (2e) du bloc support (2) dans lequel est montée, avec capacité de déplacement, la collerette (1e) du piston (1).

Les avantages ressortent bien de la description, en particulier on souligne et on rappelle :
- le dispositif permet d'augmenter la sécurité en évitant tout risque de retournement de la moto au freinage, la roue arrière restant collée au sol, de sorte que le conducteur peut actionner à fond le levier de frein ;
- le dispositif permet d'exploiter la totalité des capacités de freinage du véhicule en contrôlant la charge minimum sur la roue arrière pendant toute la durée du freinage diminuant ainsi, d'une manière conséquente, les distances d'arrêt ;
- le dispositif permet de s'affranchir des variations d'efficacité d'un système classique de freinage, à savoir : variation du coefficient de frottement plaquettes-disque suivant les conditions d'utilisation et la température ; ces dispositions s'avèrent particulièrement intéressantes pour les freinages carbonc/carbone où le coefficient de frottement peut varier du simple au double entre le début et la fin du freinage ;
- la compatibilité du dispositif avec un système antibloquant susceptible d'être branché entre la valve et l'étrier de frein.

Comme déjà indiqué, le mode de réalisation décrit et illustré est considéré comme particulièrement avantageux, mais ne doit pas être considéré comme limitatif. L'invention couvre également tous moyens techniques susceptibles d'être considérés comme équivalents, c'cst-à-dire de remplir les mêmes fonctions, malgré une forme de réalisation différente.

Ainsi, il est possible d'utiliser un capteur de force positionné à une extrémité de l'amortisseur pour envoyer un signal au système d'antiblocage des roues qui équipe le véhicule, de manière à ce que ledit système réduise la pression dans le circuit comme il le fait en cas de détection de blocage des roues.

## Revendications

1. Dispositif de freinage d'un véhicule comprenant un maître cylindre relié hydrauliquement à des étriers montés au niveau des organes de freinage des roues du véhicule, lesdits étriers recevant des pistons pour agir, sous un effort de pression, sur une partie desdits organes, ledit dispositif comprenant des moyens aptes à mesurer la charge exercée sur la ou les roues arrière en combinaison avec des moyens (VA) aptes à diminuer la pression au niveau des étriers de la ou des roues avant et aptes à fournir une charge nécessaire sur la ou les roues arrière du véhicule pour éviter tout soulèvement intempestif de la ou desdites roues arrière en cas de freinage puissant, **caractérisé en ce que** lesdits moyens (1) sont reliés au circuit hydraulique de freinage et assujettis à au moins un élément amortisseur de la ou des roues arrière.

2. Dispositif selon la revendication 1, **caractérisé en ce que** les moyens aptes à mesurer la charge exercée sur la ou les roues arrière sont constitués par un piston (1) monté coaxialement à l'élément amortisseur et apte à être déplacé linéairement, d'une manière limitée avec capacité de guidage étanche dans un chambrage (2a) d'un bloc (2) rendu solidaire d'une partie fixe du véhicule, ledit chambrage (2a) étant en communication avec le circuit hydraulique de freinage au niveau du maître cylindre et de l'étrier de la ou des roues avant.

3. Dispositif selon la revendication 1, **caractérisé en ce que** les moyens aptes à diminuer la pression sont constitués par une valve (VA) montée coaxialement en bout du piston (1) en combinaison avec des agencements pour être commandée sous un effet de déplacement dudit piston (1) en vue de réguler la pression hydraulique au niveau notamment de l'étrier de la ou des roues avant.

4. Dispositif selon la revendication 3, **caractérisé en ce que** la valve comprend un corps (4) rendu solidaire d'un alésage (1a) formé en bout du piston (1), ledit corps (4) présentant un chambrage interne (4a) faisant office de siège à une bille (5) assujettie à un organe élastique (6), ledit chambrage (4a) étant en communication avec le circuit hydraulique du maître cylindre, la bille étant apte à coopérer avec un élément fixe (9) sous un effet de déplacement du piston (1) pour être écartée de son siège (4a) .

5. Dispositif selon l'une quelconque des revendications 1 et 4, **caractérisé en ce que** sous l'effet d'une charge, considérée comme normale, exercée sur la ou les roues arrière, le piston (1) de la valve est en butée sur une partie fixe du bloc support (2), la bille étant écartée de son siège pour permettre le passage du fluide provenant du maître cylindre, en direction de l'étrier de la ou des roues avant ; inversement, lorsque ladite charge n'est pas considérée comme suffisante, il y a un déplacement relatif du piston (1) de la valve et du bloc (2) jusqu'à une autre position extrême de butée correspondant au positionnement de la bille (5) au fond de son siège (4a) pour diminuer la pression en direction dudit étrier.

6. Dispositif selon la revendication 4, **caractérisé en ce que** l'élément fixe (9) coopérant avec la bille (5) est constitué par une vis solidaire du bloc support (2) et débouchant dans les chambrages (2a) et (4a) dudit bloc (2) et du corps (4) de valve.

7. Dispositif selon la revendication 2, **caractérisé en ce que** le bloc support (2) dans lequel est monté, avec capacité de déplacement linéaire, le piston (1) de la valve est accouplé à l'élément amortisseur, en combinaison avec des moyens de réglage de la charge exercée sur la ou les roues arrière.

8. Dispositif selon la revendication 2, **caractérisé en ce que** le piston (1) de la valve est monté à l'intérieur du bloc (2) avec capacité de déplacement linéaire à l'encontre d'un moyen d'amortissement hydraulique.

## Claims

1. Device for braking a vehicle comprising a master cylinder connected hydraulically to forks mounted at the braking members of the vehicle wheels, the said forks accommodating pistons to act, under a pressure force, on a portion of the said members, the said device comprising means for measuring the load applied to the back wheel or wheels in combination with means (VA) for reducing the pressure at the forks of the front wheel or wheels and suitable for supplying a load required on the back wheel or wheels of the vehicle to prevent any accidental lifting of the said back wheel or wheels in case of powerful braking, **characterized in that** the said means (1) are connected to the hydraulic braking circuit and subjected to at least one shock absorbing element of the back wheel or wheels.

2. Device according to Claim 1, **characterized in that** the means for measuring the load applied to the back wheel or wheels consists of a piston (1) mounted coaxially with the shock absorbing element and suitable for being shifted linearly, in a limited manner with sealed guidance capacity in a recess (2a) of a block (2) joined to a fixed portion of the vehicle, the said recess (2a) communicating with the hydraulic braking circuit at the master cylinder and the fork of the front wheel or wheels.

3. Device according to Claim 1, **characterized in that** the means for reducing the pressure consists of a valve (VA) mounted coaxially at the end of the piston (1) in combination with arrangements for being controlled under the effect of a movement of the said piston (1) in order to control the hydraulic pressure in particular at the fork of the front wheel or wheels.

4. Device according to Claim 3, **characterized in that** the valve comprises a body (4) joined to a bore (1a) formed at the end of the piston (1), the said body (4) having an internal recess (4a) acting as the seat of a ball (5) subject to an elastic member (6), the said recess (4a) communicating with the hydraulic circuit of the master cylinder, the ball being suitable for cooperating with a fixed element (9) under an effect of movement of the piston (1) to be separated from its seat (4a).

5. Device according to any one of Claims 1 to 4, **characterized in that** under the effect of a load, considered as normal, applied to the back wheel or wheels, the piston (1) of the valve thrusts against a fixed portion of the support block (2), the ball being separated from its seat to permit the passage of the fluid issuing from the master cylinder, towards the fork of the front wheel or wheels; conversely, when the said load is not considered as sufficient, a relative movement occurs of the piston (1) of the valve and of the block (2) up to another extreme thrust position corresponding to the positioning of the ball (5) at the bottom of its seat (4a) to reduce the pressure towards the said fork.

6. Device according to Claim 4, **characterized in that** the fixed element (9) cooperating with the ball (5) consists of a screw joined to the support block (2) and terminating in the recesses (2a) and (4a) of the said block (2) and of the valve body (4).

7. Device according to Claim 2, **characterized in that** the support block (2) in which the valve piston (1) is mounted, with linear movement capacity, is coupled to the shock absorbing element, in combination with means for adjusting the load applied to the back wheel or wheels.

8. Device according to Claim 2, **characterized in that** the valve piston (1) is mounted inside the block (2) with linear movement capacity against a hydraulic shock absorbing means.

## Patentansprüche

1. Bremsvorrichtung für ein Fahrzeug, mit einem Hauptzylinder, der mit Bremssätteln, die auf Höhe der Bremsorgane der Räder des Fahrzeugs angebracht sind, hydraulisch verbunden ist, wobei die Bremssättel Kolben enthalten, um unter einer Druckkraft auf einen Teil der Organe einzuwirken, wobei die Vorrichtung Mittel umfasst, die die auf das oder die Hinterräder ausgeübte Last messen können und mit Mitteln (VA) kombiniert sind, die den Druck auf Höhe der Bremssättel des oder der Vorderräder verringern können und eine erforderliche Last an das oder die Hinterräder des Fahrzeugs liefern können, um jegliches unerwünschte Anheben des oder der Hinterräder im Fall einer starken Bremsung zu vermeiden, **dadurch gekennzeichnet, dass** diese Mittel (1) mit dem Bremshydraulikkreis verbunden sind und an wenigstens einem Dämpfungselement des oder der Hinterräder befestigt sind.

2. Vorrichtung nach Anspruch 1, **dadurch gekennzeichnet, dass** die Mittel, die die auf das oder die Hinterräder ausgeübte Last messen können, durch einen Kolben (1) gebildet sind, der koaxial zu dem Dämpfungselement angebracht ist und geradlinig auf begrenzte Weise verlagert werden kann, wobei er auf dichte Weise in einer Vertiefung (2a) eines Blocks (2) geführt werden kann, der mit einem festen Teil des Fahrzeugs fest verbunden ist, wobei die Vertiefung (2a) mit dem Bremshydraulikkreis auf Höhe des Hauptzylinders und des Bremssattels des oder der Vorderräder kommuniziert.

3. Vorrichtung nach Anspruch 1, **dadurch gekennzeichnet, dass** die Mittel, die den Druck verringern können, durch ein Ventil (VA) gebildet sind, das am Ende des Kolbens (1) koaxial angebracht ist und mit Anordnungen, kombiniert ist, um unter der Wirkung einer Verlagerung des Kolbens (1) gesteuert zu werden, um den Hydraulikdruck insbesondere auf Höhe des Bremssattels des oder der Vorderräder zu regulieren.

4. Vorrichtung nach Anspruch 3, **dadurch gekennzeichnet, dass** das Ventil einen mit einer am Ende des Kolbens (1) ausgebildeten Bohrung (1a) fest verbundenen Körper (4) umfasst, wobei der Körper (4) eine innere Vertiefung (4a) aufweist, die als Sitz für eine Kugel (5) dient, die an einem elastischen Organ (6) befestigt ist, wobei diese Vertiefung (4a) mit dem Hydraulikkreis des Hauptzylinders kommuniziert, wobei die Kugel unter der Wirkung einer Verlagerung des Kolbens (1) mit einem festen Element (9) zusammenwirken kann, um von ihrem Sitz (4a) abgehoben zu werden.

5. Vorrichtung nach einem der Ansprüche 1 und 4, **dadurch gekennzeichnet, dass** der Kolben (1) des Ventils unter der Wirkung einer als normal angesehenen Last, die auf das oder die Hinterräder ausgeübt wird, an einem festen Teil des Trägerblocks (2) anschlägt, wobei die Kugel von ihrem Sitz abgehoben ist, um den Durchgang von Fluid vom Hauptzylinder in Richtung zum Bremssattel des oder der Vorderräder zu ermöglichen; wobei umgekehrt dann, wenn die Last nicht als ausreichend angesehen wird, eine relative Verlagerung des Kolbens (1) des Ventils und des Blocks (2) bis in eine andere extreme Anschlagposition, die der Position der Kugel (5) auf dem Boden des Sitzes (4) entspricht, erfolgt, um den Druck in Richtung des Bremssattels zu verringern.

6. Vorrichtung nach Anspruch 4, **dadurch gekennzeichnet, dass** das mit der Kugel (5) zusammenwirkende feste Element (9) durch eine mit dem Trägerblock (2) fest verbundene Schraube gebildet ist und in die Vertiefung (2a) und (4a) des Blocks (2) bzw. des Körpers (4) des Ventils ragt.

7. Vorrichtung nach Anspruch 2, **dadurch gekennzeichnet, dass** der Trägerblock (2), in dem der Kolben (1) des Ventils so angebracht ist, dass er sich geradlinig verlagern kann, mit dem Dämpfungselement gekoppelt ist und mit Mitteln zum Regulieren der auf das oder die Hinterräder ausgeübten Last kombiniert ist.

8. Vorrichtung nach Anspruch 2, **dadurch gekennzeichnet, dass** der Kolben (1) des Ventils in dem Block (2) so angebracht ist, dass er sich entgegen einem hydraulischen Dämpfungsmittel geradlinig verlagern kann.
